# EUROPEAN PATENT APPLICATION

(11) **EP 2 732 793 A1**
(43) Date of publication of application: **21.05.2014**
(21) Application number: 12811045.9
(22) Date of filing: 11.07.2012
(51) Int. Cl.: A61C 13/12

(54) **VERTICAL PRECISION DRILL**

(30) Priority: 12.07.2011 ES 201131173 P
(71) Applicant: Dentisel, S.L., 08520 Les Franqueses del Valles (Barcelona) (ES)
(72) Inventor: COSTA CODINA, Xavier, E-08520 Les Franqueses Del Valles (Barcelona) (ES)
(74) Representative: Carpintero Lopez, Francisco
(86) International application number: PCT/ES2012/070522
(87) International publication number: WO 2013/007858

(57) **Abstract**

The present invention discloses a vertical precision drill (1) of the type used in work which requires a high degree of precision, such as the perforation of dental prostheses, and which essentially comprises a support column (2) on which there are arranged a fixed head (3) containing a motor and a gear mechanism for obtaining different speeds, the main shaft or spindle (4) for drilling and a base (5) located on the lower portion, which supports the assembly, and a perforating element (6) with a diameter equal to that of the retaining screw for screwing the prosthesis or prosthetic assembly to the implant or implant post in the mouth.

## Description

### Technical Field of the Invention

The present invention corresponds to the technical field of column or vertical drills that are very suitable for work which requires a high degree of precision, in this specific case for the perforation of dental prostheses where these perforations must have a small diameter and the materials to be perforated are fragile in nature.

In these conditions, it is of great importance to perform drilling with the greatest precision possible so that it suits the actual prosthesis perfectly and to prevent generating positioning imperfections during subsequent placement in the mouth, or stresses in the implants, with possible breakage or rejection thereof, caused by deviations in the load of the prosthesis on the implant.

### Background of the Invention

Today, dental implant patients have increasing demands on aesthetic and functional needs, requiring the reduction of the time period necessary for reconstructing a tooth, several teeth or even the entire set of teeth.

Likewise, the actual scientific progress in the field of designing implants and their surfaces for quick primary and secondary osseointegration generate a tendency to place prosthesis on the very day of the intervention, even during the surgical procedure itself.

For a prosthesis to obtain a good result once placed in the patient's mouth, two fundamental conditions, which said prosthesis must meet, are required, i.e., it must have a passive fit and a correct retention to the implant or to the fixing element.

Passive fit is the ideal stress-free situation, i.e., when a structure sits on the implants/posts without applying external forces. In practice, this is virtually impossible because minor errors or positional deviations usually build up during preparation. In implants with rigid osseointegration, this generates deforming stresses that translate into static forces affecting both the attachments between the components of the prosthesis and the implants and the implant/bone interaction itself.

On the other hand, the retention must also be correct, because otherwise chewing, swallowing and speaking problems are generated.

The best retention for a prosthesis is a fixed retention that prevents these problems as it does not allow the prosthesis to move. Cementation can be used to fix the prosthesis, said cementation providing a perfect retention in terms of immobility but with the drawback that if a problem arises and it must be removed, only a dentist can perform the extraction with risk of damaging the prosthetic piece.

In turn, screw-based retention is another type of retention providing the advantages of cementation, and in turn if it is necessary to extract the prosthesis, the dentist will extract same by simply unscrewing without causing stresses thereon.

Today, there are methods for preparing immediate prostheses. These can be direct methods by means of fitting the prosthesis directly on the implant or implant post in the patient's mouth or indirect methods in which the prosthesis is fitted in a laboratory, on a model with implant or implant post replicas.

These methods are developed for preparing prosthesis that are retained by friction, clipping or by direct connection of the abutment, but not by screwing which is the fixing method that offers the best retention without the drawbacks of cementing.

To transform these prostheses that are not screwed into screwed ones, manual methods for perforating the piece are used today. These methods are slow and rather imprecise as they depend on the effectiveness of the person performing them, thereby putting the actual passive fit in addition to the correct retention of the prosthesis at risk, with the problems that this can entail in the prosthesis/implant or implant post attachment.

### Description of the Invention

The vertical precision drill presented herein for use on dental prostheses, and comprising a support column on which there are arranged a fixed head containing a motor and a gear mechanism for obtaining different speeds, the main shaft or spindle for drilling and a base located on the lower portion, which supports the assembly, further comprises a vertical perforating element having a guide and a drum fixed to the base of the drill, having a revolver assembly to which the implant or implant post replicas, on which the abutment of the dental prosthesis or prosthetic assembly is fitted by friction, clipping or direct connection, are secured by fixing means.

The perforating element of this drill is preferably a milling cutter fitted in the spindle or main shaft and has, by means of the guide, a downwards vertical movement on the point of the prosthesis to be drilled. This milling cutter has a diameter equal to that of the retaining screw for screwing the prosthesis or prosthetic assembly to the implant or implant post in the mouth, such that the perforation that it generates in the prosthesis is a perfect hole through which said retaining screw runs.

For time reduction and taking in consideration that a prosthetic assembly usually requires more than one connection point in the mouth, one for each implant performed, it is necessary to make more than one hole in said prosthetic assembly.

To that end and to prevent having to adjust the position of the point to be drilled in the case of each hole to be perforated, the revolver assembly comprising the drum fitted to the base of the drill proposed herein is very practical, such that once a hole is drilled in the prosthetic assembly, this revolver assembly rotates until the next location of a new hole is placed under the vertical of the perforating element.

Once the prosthetic assembly is located to make a new hole, the revolver assembly on which the prosthetic assembly is fitted is fixed such that its position is again blocked, preventing rotational movement during the new drilling process. To that end, the revolver assembly comprises a retention element in the form of a rod preventing the rotation thereof during said process.

The vertical drill in turn comprises a safety and precision control for drilling adjusted to each abutment.

The implant or implant post replicas secured to the revolver assembly by fixing means for fitting the prosthesis or prosthetic assembly therein, can be fixed or interchangeable, preferably interchangeable, so that they can be replaced if they wear out.

Likewise, the retention element of the revolver assembly can be fixed or interchangeable, preferably interchangeable, so that it can also be replaced if it wears out.

The means for moving the perforating element forward over the part to be drilled have two modalities, a manual and another mechanical modality. The mechanical modality is used for rotating the perforating element on the prosthetic assembly whereas the manual modality is preferably used for moving the perforating element closer to said prosthetic assembly.

The vertical precision drill proposed herein provides an improvement over the state of the art from the point of view that it achieves the mechanization of the process of converting the screwless retention of a prosthesis or prosthetic assembly immediate to the implant or implant post in the mouth into screw-based retention, with the advantages it entails.

By mechanizing the process, converting it into an automatic process, a greater precision in the holes made in the parts is obtained as it does not depend on the operator's skill and experience. Parts having a high degree of passive fit which is the ideal situation in such products for to not generate stresses in the implant or in the osseointegration thereof, are thereby obtained.

The added advantage of a more hygienic process, an important aspect as it is an element that will be fitted in the patient's mouth and must therefore have the highest degree of disinfection possible preventing the presence of possible infections or rejections in the area of the implant, is also obtained.

Finally, time reduction for obtaining a prosthesis or prosthetic assembly combining the basic conditions of passive fit and screw-based retention providing an effective retention is achieved. In the state of the art, a prosthesis with a retention system based on friction, clipping or by direct connection of the abutment, or in any case, screwless retention, is manually converted into screw-based retention, which leads to more time being invested in this conversion, in addition to the mentioned drawbacks of lack of precision.

With the drill considered herein, the mechanized system involves an automatic conversion of the prosthesis or prosthetic assembly into screw-based retention, fully fitted and calibrated, that uses less time compared to the current manual process.

### Brief Description of the Drawings

For the purpose of aiding to better understand the features of the invention according to a preferred practical embodiment thereof, a set of drawings is attached to the following description in which the following has been depicted with an illustrative and non-limiting character:
Figure 1 shows a perspective view of the vertical precision drill object of the invention.
Figure 2 shows a plan view of the drum fitted to the base of the drill and comprising the revolver assembly.
Figure 3 shows the A-A' section of the drum fitted to the base of the drill and comprising the revolver assembly.

### Detailed Description of a Preferred Embodiment of the Invention

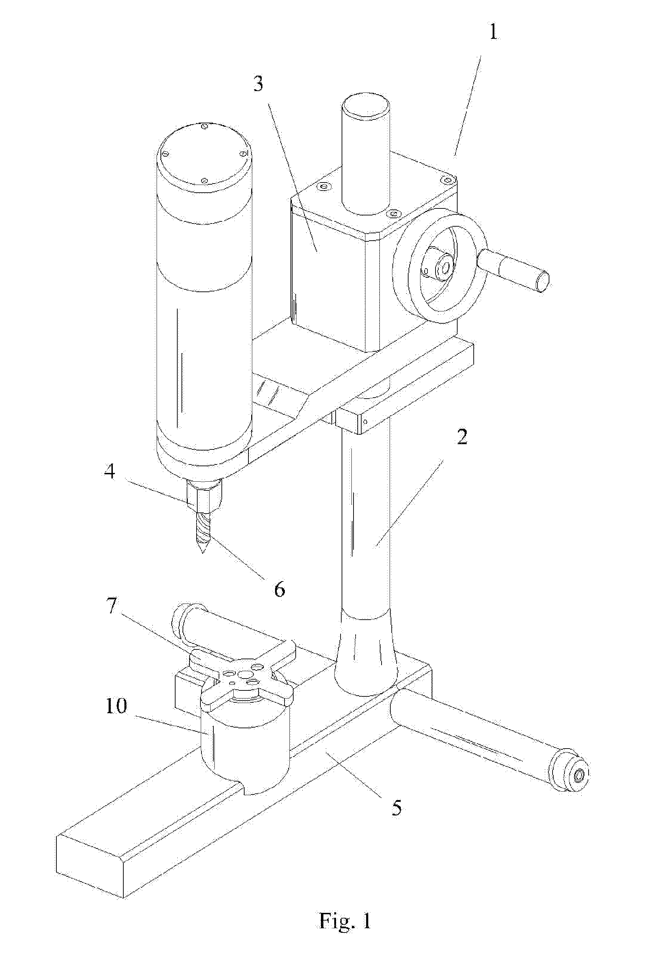

In the view of the provided drawings, how in a preferred embodiment of the invention the vertical precision drill presented herein is used on dental prostheses can be seen, said drill comprising as shown in Figure 1 a support column (2) on which there are arranged a fixed head (3) internally containing a motor and a gear system providing different drilling speeds, a main shaft or spindle (4) for drilling and a base (5) located on the lower portion, which supports the assembly.

The vertical precision drill (1) proposed herein further comprises a vertical perforating element (6) with a guide. The perforating element (6) which in this preferred example of the invention is a milling cutter, is fitted to the spindle (4) and the rotational movement thereof perforates the dental prosthesis or prosthetic assembly.

The milling cutter has the diameter of the head of the retaining screw used for screwing the prosthesis or prosthetic assembly to the implant or implant post, such that it generates a perfect hole in the prosthesis through which the screw runs for retaining same to an implant or implant post in the mouth.

The vertical precision drill (1) in turn comprises in the base (5), a drum (10) fitted to same and having a revolver assembly (7) to which the implant or implant post replicas on which the abutment of the dental prosthesis or prosthetic assembly is fitted by friction, clipping or direct connection, are secured by fixing means.

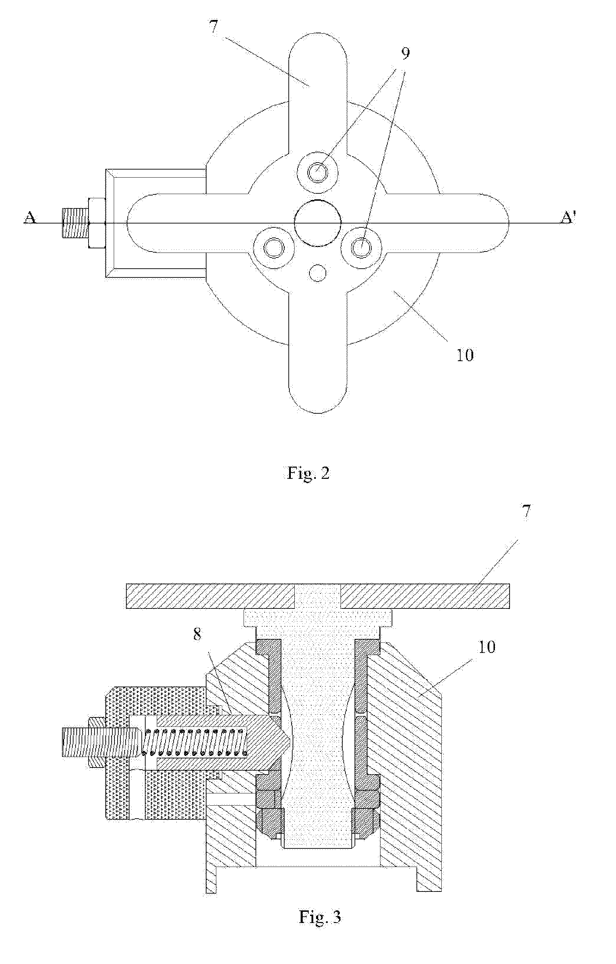

As shown in Figure 3, this revolver assembly (7) comprises a retention element (8) in the form of a rod preventing the rotation thereof when drilling the part. In this preferred example of the invention, this retention element (8) is interchangeable, this being very useful if it wears out.

On the other hand, Figures 1 and 2 show how in this preferred example of the invention, the fixing means for fixing the implant or implant post replicas to the revolver assembly (7) are connection holes (9) in which said replicas are screwed such that in this preferred example of the invention the replicas are interchangeable, again being very practical if they wear out.

The vertical precision drill (1) presented herein comprises a safety and precision control for drilling adjusted to each abutment and, the forward movement of the spindle (4) with the perforating element (6) over the part to be drilled has a manual modality for moving the perforating element (6) closer to the prosthesis or prosthetic assembly and a mechanical modality for the rotational movement of the perforating element (6).

With the vertical precision drill proposed herein, an improvement over the state of the art is achieved by obtaining the mechanization of the process of converting the screwless retention of a prosthesis or prosthetic assembly to an implant or implant post into screw-based retention.

By mechanizing the process, the possible deviations and imprecisions entailed by any manual process are eliminated, thereby resulting in much more precise parts with a very high degree of passive fit.

Passive fit parts are thus obtained with the screw-based retention means, these being the ideal characteristics of a prosthesis or prosthetic assembly to expect an effective operation thereof, and all this in a shorter time period, since the mechanization generates a quick and efficient process since it is calibrated and adjusted to that end.

## Claims

1. Vertical precision drill (1) for use on dental prostheses, comprising a support column (2) on which there are arranged a fixed head (3) containing a motor and a gear mechanism for obtaining different speeds, the main shaft or spindle (4) for drilling and a base (5) located on the lower portion, which supports the assembly, **characterized in that** it further comprises a vertical perforating element (6) having a guide, and a drum (10) fixed to the base of the drill, having a revolver assembly (7) to which the implant or implant post replicas on which the abutment of the dental prosthesis or prosthetic assembly is fitted, are secured by fixing means.

2. Vertical precision drill (1) according to claim 1, **characterized in that** the perforating element (6) is a milling cutter with a diameter equal to that of the retaining screw for screwing the prosthesis or prosthetic assembly to the implant or implant post in the mouth.

3. Vertical precision drill (1) according to any of the preceding claims, **characterized in that** the revolver assembly (7) comprises a retention element (8) in the form of a rod preventing the rotation of said revolver assembly (7) when drilling.

4. Vertical precision drill (1) according to claim 3, **characterized in that** the retention element (8) of the revolver assembly (7) is fixed.

5. Vertical precision drill (1) according to claim 3, **characterized in that** the retention element (8) of the revolver assembly (7) is interchangeable.

6. Vertical precision drill (1) according to any of the preceding claims, **characterized in that** the vertical drill comprises a safety and precision control for drilling adjusted to each abutment.

7. Vertical precision drill (1) according to any of the preceding claims, **characterized in that** the implant or prosthesis post replicas connected to the revolver assembly (7) are fixed.

8. Vertical precision drill (1) according to any of the claims 1 a 6, **characterized in that** the implant or prosthesis post replicas connected to the revolver assembly (7) are interchangeable.

9. Vertical precision drill (1) according to claim 8, **characterized in that** the fixing means for fixing the at least one implant or implant post replica to the revolver assembly (7) are connection holes (9) on which said replicas are screwed.

10. Vertical precision drill (1) according to any of the preceding claims, **characterized in that** the means for moving the perforating element (6) forward over the part to be drilled have two modalities, a manual and another mechanical modality.
